Europäisches Patentamt

European Patent Office

Office européen des brevets

(11) Veröffentlichungsnummer: **0 196 719 B1**

# EUROPÄISCHE PATENTSCHRIFT

(45) Veröffentlichungstag der Patentschrift: **29.05.91**

(21) Anmeldenummer: **86200487.6**

(22) Anmeldetag: **21.03.86**

(51) Int. Cl.⁵: **C03B 19/04**, C03B 19/09, C03B 37/012

(54) Verfahren und Vorrichtungen zur Herstellung von Glaskörpern.

(30) Priorität: 29.03.85 DE 3511453

(43) Veröffentlichungstag der Anmeldung:
08.10.86 Patentblatt 86/41

(45) Bekanntmachung des Hinweises auf die
Patenterteilung:
29.05.91 Patentblatt 91/22

(84) Benannte Vertragsstaaten:
DE FR GB IT NL SE

(56) Entgegenhaltungen:
EP-A- 0 123 191

(73) Patentinhaber: **Philips Patentverwaltung GmbH**
**Wendenstrasse 35 Postfach 10 51 49**
**W-2000 Hamburg 1(DE)DE**

Patentinhaber: **N.V. Philips' Gloeilampenfabrieken**
**Groenewoudseweg 1**
**NL-5621 BA Eindhoven(NL)FR GB IT NL SE**

(72) Erfinder: **Clasen, Rolf, Dipl.-Phys., Dr.**
**Schlossparkstrasse 36**
**W-5100 Aachen(DE)**

(74) Vertreter: **Nehmzow-David, Fritzi-Maria et al**
**Philips Patentverwaltung GmbH Wendenstrasse 35 Postfach 10 51 49**
**W-2000 Hamburg 1(DE)**

## Beschreibung

Die Erfindung betrifft ein Verfahren zur Herstellung von Glaskörpern, bei dem aus dem Ausgangsmaterial für den Glaskörper in Form einer thixotropen Suspension ein poröser Grünkörper geformt, getrocknet, gereinigt und anschließend gesintert wird.

Die Erfindung bezieht sich weiter auf Vorrichtungen zur Durchführung eines solchen Verfahrens, wie sie in den Oberbegriffen der Ansprüche 16 und 18 angegeben und als solche bekannt sind.

Das eingangs genannte Verfahren ist als solches bekannt und ist insbesondere geeignet zur Herstellung von Vorformen für optische Wellenleiter aus Quarzglas.

Optische Wellenleiter werden bei einer Vielzahl von Anwendungszwecken eingesetzt, so für Lichtübertragungseinrichtungen kurzer Distanz oder für Lichtübertragungssysteme großer Distanz, wie bei optischen Kommunikationssystemen, und bestehen überwiegend aus einem Glas mit hohem Siliciumdioxidgehalt (das erforderlichenfalls ein Dotierungsmittel zur Einstellung des Brechungsindex des Glases enthält).

Gläser, die für optische Wellenleiter geeignet sind, sind ebenfalls mit Vorteil verwendbar für die Herstellung von Lampenkolben für Halogen- oder Gasentladungslampen, denn diese Gläser müssen, ebenso wie die Gläser für optische Wellenleiter, nahezu wasserfrei sein und einen hohen Siliciumdioxidgehalt aufweisen.

Zur Herstellung von Vorformen für optische Wellenleiter ist es allgemein bekannt, von hochdispersen kolloidalen $SiO_2$-Suspensionen auszugehen, aus denen Grünkörper geformt, getrocknet, gereinigt und anschließend gesintert werden.

Der Erfindung liegt die Aufgabe zugrunde, ein Verfahren der eingangs genannten Art und Vorrichtungen der eingangs genannten Art zur Durchführung dieses Verfahrens zu schaffen, mit dem es möglich ist, Grünkörper aus einer Suspension von hochdispersen Quarzglasteilchen so herzustellen, daß eine Rißbildung beim Trocknen weitgehend ausgeschlossen wird und Grünkörper erhalten werden, die bereits eine so hohe Dichte und Festigkeit aufweisen, daß sie problemlos handhabbar sind und eine relativ geringe Schwindung beim Sintern erfahren.

Diese Aufgabe wird erfindungsgemäß dadurch gelöst, daß das Ausgangsmaterial durch Einkopplung mechanischer Kräfte in einen Zustand mit Viskositätsminimum überführt und homogenisiert, in dünnflüssigem Zustand in eine der Form des herzustellenden Glaskörpers entsprechende Form aus einem hydrophoben Material eingegossen und in der Form getrocknet wird, bis eine Schwindung von etwa 10% erreicht ist und anschließend nach Entformen den weiteren Fertigungsschritten zur Herstellung des Glaskörpers unterzogen wird.

Vorrichtungen zur Durchführung des erfindungsgemäßen Verfahrens sind gekennzeichnet durch

1. eine der Form des herzustellenden Glaskörpers entsprechende Form zur Aufnahme von in Form einer Suspension vorliegendem Ausgangsmaterial für den Glaskörper aus einem hydrophoben Material mit einem Deckel, der mindestens eine Öffnung aufweist, über welche Dispergierflüssigkeit während des Trocknungsprozesses aus dem Ausgangsmaterial ausdiffundieren kann oder

2. eine poröse, der Form des herzustellenden Glaskörpers entsprechende Form aus einem hydrophoben, vorzugsweise elastischen Kunststoff mit Poren eines Durchmessers in der Größe der Moleküle der Dispergierflüssigkeit, über welche Dispergierflüssigkeit während des Trockungsprozesses aus Ausgangsmaterial für den Glaskörper in Form einer Suspension ausdiffundieren kann.

Der Erfindung liegt die Erkenntnis zugrunde, daß ein besonders hoher Thixotropieeffekt bei Suspensionen mit hochdispersen $SiO_2$-Teilchen, bevorzugsweise eines Teilchendurchmessers im Bereich von 10 bis 500 nm eintritt, der noch durch Zusatz einer die Vernetzung der Feststoffpartikel in der Suspension fördernden ionogen Substanz, die den pH-Wert der Suspension in den sauren (pH < 3) oder in Richtung auf den basischen Bereich (pH = 5,5 bis 8) verschiebt, unterstützt wird, der dazu ausgenutzt werden kann, das Ausgangsmaterial zunächst durch Einwirkung mechanischer Kräfte, vorzugsweise Schall oder Ultraschall, in einen Zustand mit Viskositätsminimum zu überführen, also zu verflüssigen, bei dem es effizient homogenisiert werden kann und wobei der ionogene, eine Vernetzungsreaktion der Feststoffpartikel fördernde Zusatzstoff in der Suspension feinst verteilt wird. Nach Abkopplung der mechanischen Kräfte verfestigt sich die Suspension aufgrund des Thixotropieeffektes sehr schnell und dieser Effekt kann dazu ausgenutzt werden, mittels einer Form aus hydrophobem Material formstabile Grünkörper aus einer dünnflüssigen Suspension zu erhalten. Der Erfindung liegt weiter die Erkenntnis zugrunde, daß eine unerwünschte Rißbildung bei aus Suspensionen hergestellten Grünkörpern dadurch entsteht, daß die Oberflächenspannung der Dispergierflüssigkeit die Feststoffteilchen beim Eintrocknen zusammenzieht. Bei nicht ausreichenden Bindungskräften zwischen den Feststoffteilchen bilden sich, besonders an Inhomogenitäten, leicht Risse. Um diese Gefahr zu verringern, muß also eine möglichst homogene Suspension angestrebt werden. Um die Trockenschwindung eines Grünkörpers und damit ebenfalls die Gefahr einer Rißbildung bei aus Suspensionen hergestellten Grünkörpern zu vermindern, ist es außerdem wichtig, von Grünkörpern mit einer höheren relativen Dichte auszugehen; die Dichte sollte möglichst > 35% der Dichte kompakten Quarzglases betragen. Mit kolloidalen Suspensionen, wie sie z.B. aus DE-OS 30 01 792 bekannt sind, ist eine so hohe Dichte nicht zu erreichen. Zur Verhinderung einer Rißbildung beim Trocknen bei aus Suspensionen hergestellten Grünkörpern ist es nach einer weiteren Erkenntnis der Erfindung wichtig, daß keine Spannungen zwischen der Form, in der eine thixotrope Suspension zu einem formstabilen Grünkörper verfestigt, und dem Grünkörper entstehen können.

Diese Erkenntnisse insgesamt haben zu den Verfahrensschritten und den zur Durchführung dieses Verfahrens geeigneten Vorrichtungen geführt.

Nach vorteilhaften Weiterbildungen des Verfahrens nach der Erfindung werden als Dispergierflüssigkeit Wasser und eine Suspension eingesetzt, die $SiO_2$-Partikel eines Teilchendurchmessers im Bereich von 10 bis 500 nm, vorzugsweise 15 bis 100 nm, mit einem mittleren Teilchendurchmesser von 40 nm bei einem Feststoff:Dispergierflüssigkeit-Verhältnis von 0,5:1 bis 1,2:1 enthält.

Hiermit ist der Vorteil verbunden, daß Grünkörper erreicht werden können mit einer vorteilhaft hohen Dichte, die 35 bis 50%, vorzugsweise 45% der Dichte kompakten Quarzglases beträgt.

Nach einer vorteilhaften Ausgestaltung des Verfahrens nach der Erfindung wird der ionogene Zusatzstoff in einer Menge ≤ 5 Gew.%, bezogen auf den Feststoffanteil in der Suspension zugegeben. Hiermit ist der Vorteil verbunden, daß der als Vernetzungsaktivator wirkende Zusatzstoff in einer solchen Menge vorliegt, daß gerade die Oberfläche der Feststoffpartikel in der Suspension mit Ionen des ionogenen Zusatzstoffes bedeckt ist. Die Menge des zugesetzten ionogenen Zusatzstoffes sollte nicht größer als 5 Gew.%, bezogen aus den Feststoffanteil der Suspension, sein, da sich sonst die Viskosität der Suspension so stark erhöht, daß eine effiziente Homogenisierung schwierig wird.

Nach einer weiteren vorteilhaften Ausgestaltung des Verfahrens nach der Erfindung wird als ionogener Zusatzstoff eine Ammoniumverbindung und insbesondere $NH_4F$ in wässeriger Lösung eingesetzt, die den pH-Wert der Suspension in Richtung auf den basischen Bereich (pH = 5,5 bis 8) verschiebt. Ammoniumverbindungen sind leicht flüchtig und sind daher in einem nachfolgenden Reinigungs-Erhitzungsschritt rückstandslos aus dem Grünkörper zu entfernen, so daß Quarzglaskörper einer sehr hohen Reinheit herstellbar sind. Durch den Zusatz einer Ammoniumverbindung, beispielsweise $NH_3$ in wässeriger Lösung, werden Grünkörper einer relativ hohen Festigkeit erreicht, da an den Kontaktstellen zweier $SiO_2$-Primärpartikel eine Gelbildung auftritt. Bei beispielsweise einer Suspensionstemperatur von 20°C und einem pH-Wert ≤ 10 geht $SiO_2$ in der Größenordnung von etwa 100 ppm in Lösung und wird an den Kontaktstellen ausgeschieden und bildet damit eine Brückenschicht. Wird $NH_4F$ in wässeriger Lösung als ionogener Zusatzstoff eingesetzt, kann eine Fluordotierung erreicht werden, die beispielsweise für die Herstellung von Mantelgläsern für optische Wellenleiter geeignet ist.

Es sind ebenfalls ionogene, als Vernetzungsaktivatoren wirkende Zusatzstoffe geeignet, die den pH-Wert der Suspension in den sauren Bereich (pH < 3) verschieben, auch hier tritt ein optimaler Thixotropieeffekt ein. In diesem Fall kann beispielsweise HCl eingesetzt werden.

Nach einer weiteren vorteilhaften Ausgestaltung des Verfahrens nach der Erfindung wird das Ausgangsmaterial durch Einwirkung von Schall bei einer (Frequenz f = 20 bis 200 Hz, vorzugsweise 50 Hz) oder Ultraschall bei einer Frequenz f = 20 bis 50 kHz, vorzugsweise 35 kHz in einen Zustand mit Viskositätsminimum überführt. Es wurde gefunden, daß unter Ausnutzung des Thixotropieeffektes dünnflüssige, gießfähige $SiO_2$-Suspensionen erreicht und effizient homogenisiert werden können, wenn sie einer Schall- oder Ultraschalleinwirkung ausgesetzt werden. Eine Gel-Sol-Umwandlung tritt bei thixotropen Systemen bei jeder Art mechanischer Einwirkung, z.B. auch Rühren oder Schütteln, ein. Wird jedoch zur Verflüssigung eines höher viskosen Ausgangsmaterials ein Schall- oder Ultraschallschwinger eingesetzt, dessen Amplitude so bemessen ist, daß das Schall- bzw. Ultraschallfeld in das zu verflüssigende Ausgangsmaterial eingekoppelt wird, ergibt sich eine besonders wirkungsvolle Auflösung von Packungshohlräumen im Ausgangsmaterial (Gasblasen steigen im dünnflüssigen Ausgangsmaterial nach oben und werden so selbsttätig eliminiert). Ein solches Entgasen kann z.B. durch Verflüssigen des Ausgangsmaterials im Vakuum noch beschleunigt werden.

Nach vorteilhaften Weiterbildungen des Verfahrens nach der Erfindung werden als Formen aus hydrophobem Material, in die die gießfähige Suspension eingegossen und mit Hilfe des Thixotropieeffektes verfestigt und anschließend getrocknet wird, Formen aus Polytetrafluoräthylen, Polyäthylen, Polycarbonat, Plexiglas oder Polyvinylchlorid, vorzugsweise mit polierter Oberfläche, oder aus einem porösen elastischen Kunststoff eingesetzt. Die in die Formen eingebrachte Suspension wird dabei durch Diffusion des Dispergiermittels über mindestens eine Öffnung an der Oberseite der Form bei Formen aus poliertem Kunststoff oder durch Diffusion des Dispergiermittels über Poren bei Formen aus porösen elastischen Kunststoffen getrocknet. Durch den Einsatz derartiger Formen wird eine langsame Trocknung des Grünkörpers erreicht, wobei Spannungen zwischen der Form und dem trocknenden Grünkörper vermieden werden.

Nach einer weiteren Vorteilhaften Ausgestaltung des Verfahrens nach der Erfindung wird für die Form eine Folie aus einem Kunststoff eingesetzt, der in einem Lösungsmittel, das eine geringere Oberflächenspannung als die Dispergierflüssigkeit hat und mit der Dispergierflüssigkeit nicht oder weitgehend nicht mischbar ist, chemisch gelöst wird. Wird die Form auf chemischem Wege vom getrockneten Grünkörper abgelöst, ergibt sich der Vorteil, daß Verletzungen der Oberfläche des Grünkörpers, wie sie unter Umständen bei einer mechanischen Ablösung der Form entstehen können, vermieden werden.

Die mit der Erfindung erzielbaren Vorteile bestehen insbesondere darin, daß Grünkörper einer relativ hohen Dichte (35 bis 50% der Dichte kompakten Quarzglases) aus gießfähigen Suspensionen mit hochdispersen $SiO_2$-Teilchen durch räumliche Vernetzung der Feststoffpartikel und über eine gesteuerte Trocknung rißfrei hergestellt werden können.

Ausführungsbeispiele der Erfindung sind in der Zeichnung dargestellt und werden im folgenden näher beschrieben. Es zeigen:

Fig. 1 eine massive Form gemäß der Erfindung zum Verformen und Trocknen eines Grünkörpers (Schnittdarstellung)

Fig. 2 eine poröse Form gemäß der Erfindung zum Verformen und Trocknen eines Grünkörpers (Schnittdarstellung).

Als Ausgangsmaterial für die Herstellung eines Glaskörpers wurde eine wässerige, gießfähige Suspension hergestellt. Dazu wurden 150 g von im Handel erhältlichem $SiO_2$ eines Teilchendurchmessers von 10 bis 100 nm mit einem mittleren Teilchendurchmesser von 40 nm in 127,3 ml Wasser und 22,7 ml 5%ige wässerige $NH_4F$-Lösung eingerührt und in einem Gefäß unter Einwirkung von Ultraschall einer Frequenz $f = 35$ kHz etwa 10 min zur Einstellung des Viskositätsminimums homogenisiert und weitere 5 min im Ultraschallbad belassen. Die auf diese Weise erreichte dünnflüssige Suspension kann dann in Formen vergossen werden. Infolge des Thixotropieeffektes erstarrt die Suspension zu einem formstabilen Grünkörper und wird in der Form bis zu einer Trockenschwindung von etwa 10% getrocknet.

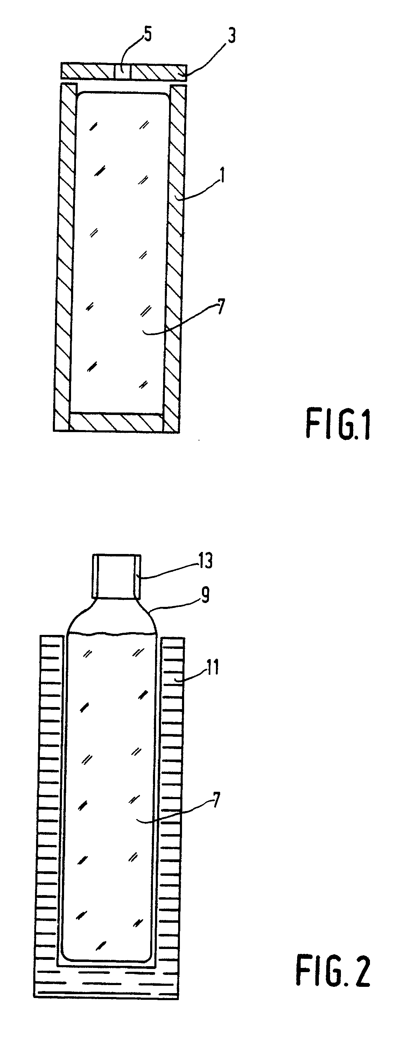

Um eine Rißbildung des Grünkörpers infolge von Spannungen zwischen der Form, in die die dünnflüssige Suspension eingegossen wird und in der sie infolge der räumlichen Vernetzung der Feststoffteilchen verfestigt, zu verhindern, wird eine solche Form eingesetzt, in der ein langsam geführter Trockenprozeß einsetzen kann und in der eine Trockenschwindung bis etwa 10% ohne Rißbildung erreicht werden kann. Dies wird dadurch realisiert, daß eine Form aus hydrophobem Material eingesetzt wird, die so beschaffen ist, daß ein Teil der Dispergierflüssigkeit durch Diffusion aus der Form entweichen kann. In Figur 1 ist eine zylindrische Form 1 aus einem polierten Polycarbonat (Durchmesser 26,0 mm) dargestellt, in die Ausgangsmaterial 7 in Form einer dünnflüssigen Suspension eingegossen wird. Die Form wird nahezu vollständig mit Suspension gefüllt und ist mit einem Deckel 3 so verschlossen, daß mindestens eine Öffnung 5 erhalten verbleibt, über welche Dispergierflüssigkeit während des Trocknungsprozesses ausdiffundieren kann. Das in der Form 1 enthaltene Ausgangsmaterial 7 wird über eine Dauer von 12 Tagen bei einer Temperatur von $25°C$ getrocknet. Nach dieser Trocknung hat sich eine Trockenschwindung von 10,3% eingestellt. In diesem Zustand wird der erhaltene Grünkörper entformt und noch einen Tag bei einer Temperatur von $60°C$ in einem Trockenschrank getrocknet. Der getrocknete Grünkörper weist eine Dichte von 45%, bezogen auf die Dichte kompakten Quarzglases, auf und ist rißfrei. Anschließend wird der Grünkörper in 100 min auf eine Temperatur von $800°C$ erhitzt und zur Entfernung von Verunreinigungen, insbesondere Wasser und Übergangsmetalle, 2 Stunden einem mit $SOCl_2$ gesättigten $O_2$-Gasstrom ausgesetzt. Die anschließende Sinterung zu einem Quarzglaskörper erfolgt bei $1500°C$ in Heliumatmosphäre mit 2 Vol% Chlorgaszusatz, wobei der Grünkörper mit einer Absenkgeschwindigkeit von 3 mm/min durch den Ofen geführt wird. Es wird ein transparenter, blasen- und schlierenfreier Glasstab eines Außendurchmessers von 20 mm erhalten, der nur Verunreinigungen < 10ppb aufweist. Das auf diese Weise hergestellte Glas hatte eine Dichte von 2,20 $g/cm^3$ und einen Brechungsindex $n_D = 1,4598$.

Die Verformung und Trocknung eines Grünkörpers kann auch in einem dünnwandigen porösen Schlauch aus einem vorzugsweise elastischen Kunststoff erfolgen, der eine Porengröße eines Durchmessers entsprechend der Größe der Moleküle der Dispergierflüssigkeit aufweist. Eine solche Form ist in Figur 2 dargestellt. Ein poröser Schlauch 9 aus Siliconkautschuk einer Wandstärke von 0,12 mm und eines Innendurchmessers von 20 mm wird in eine teilbare poröse Stützform in Form eines Zylinders 11 mit einem Innendurchmesser von 26 mm eingelegt und so aufgeblasen, daß er formschlüssig an der Stützform anliegt. Der Schlauch 9 wird dann über einen Einfüllstutzen 13 mit Ausgangsmaterial in Form einer Suspension 7, wie sie zu dem Ausführungsbeispiel gemäß Figur 1 hergestellt wurde, nahezu vollständig gefüllt. Nach einer Dauer von 2 Stunden bei einer Temperatur von 30°C ist die Suspension vollständig vernetzt, der Grünkörper hat sich also aufgrund des Thixotropieeffektes verfestigt und kann mitsamt dem Schlauch 9 aus der Stützform entfernt werden. Die Stützform in Form des Zylinders 11 ist zweckmäßigerweise aus hochmolekularem Polyäthylen mit Poren eines Porendurchmessers von 10μm hergestellt. Nach einer Trockenzeit von 3 Tagen bei einer Temperatur von 25°C hat der Grünkörper eine Trockenschwindung von 10,3%. Beim Schwinden des Grünkörpers zieht sich der beim Einfüllen der Suspension gedehnte Schlauch zusammen, es können also trotz der gegenüber dem Beispiel zu Fig. 1 forcierten, sehr viel kürzeren Trockendauer keine Risse im Grünkörper aufgrund von Spannungen zwischen Form und Grünkörper entstehen. Nach der erreichten Trockenschwindung von 10,3% wird der Grünkörper aus dem Schlauch 9 herausgeschält. Der entformte Grünkörper wird anschließend noch 1 Tag bei einer Temperatur von 60°C im Trockenschrank getrocknet und dann wie zum Beispiel gemäß Figur 1 beschrieben, weiterbehandelt. Es wurden Quarzglaskörper der gleichen Eigenschaften wie zu Figur 1 beschrieben, erhalten. Nach einem weiteren zweckmäßigen Verfahrensschritt kann der Grünkörper auch dadurch entformt werden, daß für die Form eine Folie aus einem Kunststoff eingesetzt wird, der sich leicht in einem Lösungsmittel auflösen läßt, das eine geringere Oberflächenspannung als die Dispergierflüssigkeit hat und das sich nicht oder nahezu nicht mit der Dispergierflüssigkeit mischt. Wird z.B. ein Folienschlauch aus Polycarbonat eingesetzt, kann dieser in Methylenchlorid aufgelöst werden. Durch das chemische Ablösen der Form werden Oberflächenverletzungen des Grünkörpers mit Sicherheit vermieden.

In den zu den Figuren 1 und 2 beschriebenen Formen wurden stabförmige Quarzglaskörper hergestellt. Analog dazu können auch rohrförmige Quarzglaskörper hergestellt werden, z.B. wenn ein aufgeblasener elastischer Kunststoffschlauch, der wasserdampfdurchlässig oder auch dicht sein kann, in dem porösen Schlauch 9 gemäß Figur 2 oder in der massiven Form 1 gemäß Fig. 1 zentrisch angeordnet wird.

## Ansprüche

1. Verfahren zur Herstellung von Glaskörpern, bei dem aus dem Ausgangsmaterial für den Glaskörper in Form einer thixotropen Suspension ein poröser Grünkörper geformt, getrocknet, gereinigt und anschließend gesintert wird, dadurch gekennzeichnet, daß das Ausgangsmaterial (7) durch Einkopplung mechanischer Kräfte in einen Zustand mit Viskositätsminimum überführt und homogenisiert, in dünnflüssigem Zustand in eine der Form des herzustellenden Glaskörpers entsprechende Form (1,9) aus einem hydrophoben Material eingegossen und in der Form getrocknet wird, bis eine Schwindung von etwa 10% erreicht ist und anschließend nach Entformen den weiteren Fertigungsschritten zur Herstellung des Glaskörpers unterzogen wird.

2. Verfahren nach Anspruch 1, dadurch gekennzeichnet, daß als Ausgangsmaterial (7) für den Glaskörper eine Suspension eingesetzt wird, die $SiO_2$-Partikel eines Teilchendurchmessers im Bereich von 10 bis 500 nm, vorzugsweise 15 bis 100 nm, mit einem mittleren Teilchendurchmesser von 40 nm enthält.

3. Verfahren nach Anspruch 1 oder 2, dadurch gekennzeichnet, daß eine Suspension mit einem Feststoff-Dispergierflüssigkeit-Verhältnis von 0,5:1 bis 1,2:1 eingesetzt wird.

4. Verfahren nach einem der Ansprüche 1 bis 3, dadurch gekennzeichnet, daß als Dispergierflüssigkeit Wasser eingesetzt wird.

5. Verfahren nach einem der Ansprüche 1 bis 4, dadurch gekennzeichnet, daß der Suspension ein ionogener Zusatzstoff zugefügt wird, der den pH-Wert der Suspension in Richtung auf den basischen Bereich (pH = 5,5-8) verschiebt.

6. Verfahren nach Anspruch 5, dadurch gekennzeichnet, daß der ionogene Zusatzstoff in einer Menge 5 Gew.%, bezogen auf den Feststoffanteil in der Suspension, zugegeben wird.

7. Verfahren nach Anspruch 5 oder 6, dadurch gekennzeichnet, daß als Zusatzstoff eine Ammoniumverbindung eingesetzt wird.

8. Verfahren nach Anspruch 7, dadurch gekennzeichnet, daß als Zusatzstoff eine wässerige 5%ige $NH_4F$-Lösung eingesetzt wird.

9. Verfahren nach Anspruch 8, dadurch gekennzeichnet, daß als Ausgangsmaterial (7) eine wässerige Suspension eingesetzt wird, die $SiO_2$-Partikel eines Teilchendurchmessers im Bereich von 10 bis 100 nm mit einem mittleren Teilchendurchmesser von 40 nm bei einem $SiO_2$:Wasser-Gewichtsverhältnis von 1:1 enthält, der als ionogener Zusatzstoff eine 5%ige wässerige $NH_4F$-Lösung in einer Menge von 0,8 Gew.%, bezogen auf den Feststoffanteil in der Suspension, zugesetzt ist.

10. Verfahren nach einem der Ansprüche 1 bis 9, dadurch gekennzeichnet,
daß das Ausgangsmaterial (7) durch Einwirkung von Schall bei einer Frequenz f = 20 bis 200 Hz oder Ultraschall bei einer Frequenz f = 20 bis 50 kHz in einen Zustand mit Viskositätsminimum überführt wird.

11. Verfahren nach einem der Ansprüche 1 bis 10, dadurch gekennzeichnet,
daß das Ausgangsmaterial (7) in einer Form (1) aus Kunststoff geformt und durch Diffusion des Dispergiermittels über mindestens eine Öffnung (5) an der Oberseite der Form getrocknet wird.

12. Verfahren nach Anspruch 11, dadurch gekennzeichnet,
daß als Material für die Form (1) Polytetrafluoräthylen, Polyäthylen, Polycarbonat, Plexiglas oder Polyvinylchlorid, insbesondere mit polierter Oberfläche, eingesetzt wird.

13. Verfahren nach einem der Ansprüche 1 bis 10, dadurch gekennzeichnet,
daß das Ausgangsmaterial in einer Form aus einem porösen elastischen Kunststoff mit Poren in der Größe der Moleküle des Dispergiermittels geformt und durch Diffusion des Dispergiermittels über die Poren getrocknet wird.

14. Verfahren nach Anspruch 13, dadurch gekennzeichnet,
daß als Form ein dünnwandiger Schlauch (9) aus Siliconkautschuk eingesetzt wird, der in einer Form des herzustellenden Glaskörpers entsprechenden porösen Stützform (11) angeordnet ist.

15. Verfahren nach einem der Ansprüche 11 bis 14,
dadurch gekennzeichnet,
daß für die Form (1,9) eine Folie aus einem Kunststoff eingesetzt wird, der in einem Lösungsmittel, das eine geringere Oberflächenspannung als die Dispergierflüssigkeit hat und mit der Dispergierflüssigkeit nicht oder weitgehend nicht mischbar ist, chemisch gelöst wird.

16. Vorrichtung zur Durchführung des Verfahrens nach den Ansprüchen 1 bis 15 mit einer der Form des herzustellenden Glaskörpers entsprechenden Form zur Aufnahme von als Suspension vorliegendem Ausgangsmaterial für den Glaskörper, gekennzeichnet durch eine Form aus einem hydrophoben Material mit einem Deckel (3), der mindestens eine Öffnung (5) aufweist, über welche Dispergierflüssigkeit während des Trocknungsprozesses aus dem vor Einfüllen in die Form in einen Zustand mit Viskositätsminimum überführten Ausgangsmaterial (7) ausdiffundieren kann.

17. Vorrichtung nach Anspruch 16, dadurch gekennzeichnet,
daß die Form ein Zylinder (1) aus Kunststoff, insbesondere aus Polytetrafluoräthylen, Polyäthylen, Polycarbonat, Plexiglas oder Polyvinylchlorid, insbesondere mit polierter Oberfläche, ist.

18. Vorrichtung zur Durchführung des Verfahrens nach den Ansprüchen 1 bis 15 mit einer der Form des herzustellenden Glaskörpers entsprechenden Form zur Aufnahme von als Suspension vorliegendem Ausgangsmaterial für den Glaskörper, gekennzeichnet durch eine poröse Form aus einem hydrophoben, vorzugsweise elastischen Kunststoff mit Poren eines Durchmessers in der Größe der Moleküle der Dispergierflüssigkeit, über welche Dispergierflüssigkeit während des Trocknungsprozesses aus dem vor Einfüllen in die Form in einen Zustand mit Viskositätsminimum überführten Ausgangsmaterial (7) ausdiffundieren kann.

19. Vorrichtung nach Anspruch 18, dadurch gekennzeichnet,
daß die Form in eine der Form des herzustellenden Glaskörpers entsprechende, poröse Stützform eingepaßt ist.

20. Vorrichtung nach Anspruch 18 oder 19, dadurch gekennzeichnet,
daß die Form ein Schlauch (9) aus Siliconkautschuk ist, der in eine Stützform in Form eines Zylinders (11) eingepaßt ist und der einen Einfüllstutzen (13) aufweist.

21. Vorrichtung nach einem der Ansprüche 16 bis 20,
dadurch gekennzeichnet,
daß die Form (1,9) aus einer Folie aus einem hydrophoben Kunststoff besteht, der in einem Lösungsmittel, das eine geringere Oberflächenspannung als die Dispergierflüssigkeit hat und mit der Dispergierflüssigkeit nicht oder weitgehend nicht mischbar ist, chemisch lösbar ist.

**22.** Verfahren nach den Ansprüchen 1 bis 15,
dadurch gekennzeichnet,
daß der hergestellte Glaskörper als Vorform für optische Wellenleiter eingesetzt wird.

**23.** Verfahren nach den Ansprüchen 1 bis 15,
dadurch gekennzeichnet,
daß der hergestellte Glaskörper als Lampenkolben, insbesondere für Halogen- oder Gasentladungslampen, eingesetzt wird.

## Claims

1. Method for the manufacture of glass bodies, in which the starting material for the glass body, being a thixotropic suspension, is used to form a porous green body which is dried, purified and then sintered, characterized in that the starting material (7) is transferred to a state of minimum viscosity and homogenized by the application of mechanical forces, after which it is poured in the low-viscosity state into a mould (1, 9) of a hydrophobic material which corresponds to the shape of the glass body to be produced and it is dried in the mould until a shrinkage of approx. 10% is achieved and then, after removal from the mould, it is subjected to the subsequent manufacturing steps for the production of the glass body.

2. Method as claimed in claim 1, characterized in that the starting material (7) for the glass body is a suspension which contains $SiO_2$ particles having a diameter in the range from 10 to 500 nm, preferably 15 to 100 nm, with an average particle diameter of 40 nm.

3. Method as claimed in claim 1 or 2, characterized in that a suspension with a solid/dispersing liquid ratio of 0.5:1 to 1.2:1 is used.

4. Method as claimed in one of the claims 1 to 3, characterized in that the dispersing liquid used is water.

5. Method as claimed in one of the claims 1 to 4, characterized in that an ionogenic additive which shifts the pH-value of the suspension towards the basic region (pH = 5.5-8) is added to the suspension.

6. Method as claimed in claim 5, characterized in that the ionogenic additive is added in a quantity of $\leq$ 5 wt.% of the solids content in the suspension.

7. Method as claimed in claim 5 or 6, characterized in that an ammonium compound is used as the additive.

8. Method as claimed in claim 7, characterized in that an aqueous 5% $NH_4F$ solution is used as the additive.

9. Method as claimed in claim 8, characterized in that the starting material (7) used is an aqueous suspension which contains $SiO_2$ particles having a diameter in the range from 10 to 100 nm with an average particle diameter of 40 nm and a $SiO_2$: water weight ratio of 1:1, to which a 5% $NH_4F$ aqueous solution is added as the ionogenic additive in a quantity of 0.8 wt.% after solids content in the suspension.

10. Method as claimed in one of the claims 1 to 9, characterized in that the starting material (7) is transferred to a state of minimum viscosity by the action of sound at a frequency f = 20 to 200 Hz or ultrasound at a frequency f = 20 to 50 kHz.

11. Method as claimed in one of the claims 1 to 10, characterized in that the starting material (7) is shaped in a mould (1) of a synthetic resin material and dried by means of diffusion of the dispersing agent through at least one aperture (5) at the top of the mould.

12. Method as claimed in claim 11, characterized in that the material used for the mould (1) is polytetrafluoroethylene, polyethylene, polycarbonate, plexiglass or polyvinylchloride, in particular with a polished surface.

13. Method as claimed in one of the claims 1 to 10, characterized in that the starting material is shaped in a mould of a porous elastic synthetic resin material with pores having the size of the molecules of the dispersing agent and it is dried by diffusion of the dispersing agent through the pores.

14. Method as claimed in claim 13, characterized in that the mould is a thin-walled hose (9) of silicone rubber which is arranged in a porous supporting mould (11) corresponding to the shape of the glass body to be produced.

15. Method as claimed in one of the claims 11 to 14, characterized in that for the mould (1, 9) use is made of a synthetic resin foil which is chemically dissolved in a solvent which has a lower surface tension than the dispersing liquid and is immiscible or substantially immiscible with the dispersing liquid.

16. Device for carrying out the method as claimed in claims 1 to 15, which device comprises a mould for holding starting material for the glass body in the form of a suspension, the shape of the mould corresponding to the shape of the glass body to be produced, characterized by a mould of a hydrophobic material with a cover (3) which has at least one aperture (5) through which, during the drying process, dispersing liquid can diffuse out of the starting material (7) which is transferred to a state of minimum viscosity prior to its introduction into the mould.

17. Device as claimed in claim 16, characterized in that the mould is a cylinder (1) of a synthetic resin material, especially polytetrafluorethylene, polyethylene, polycarbonate, plexiglass or polyvinylchloride, in particular with a polished surface.

18. Device for carrying out the method as claimed in claims 1 to 15, which device comprises a mould for holding starting material for the glass body in the form of a suspension, the shape of the mould corresponding to the shape of the glass body to be produced, characterized by a porous mould of a hydrophobic, preferably elastic, synthetic resin material having pores whose diameter has the size of the molecules of the dispersing liquid, through which pores dispersing liquid can diffuse out of the starting material (7), during the process, which starting material is ransferred to a state of minimum viscosity prior to its introduction into the mould.

19. Device as claimed in claim 18, characterized in that the mould is fitted into a porous supporting mould corresponding to the shape of the glass body to be produced.

20. Device as claimed in claim 18 or 19, characterized in that the mould is a hose (9) of silicone rubber which is fitted into a supporting mould in the form of a cylinder (11) and which has a filler pipe (13).

21. Device as claimed in one of the claims 16 to 20, characterized in that the mould (1, 9) consists of a foil of a hydrophobic synthetic resin material which is chemically soluble in a solvent which has a lower surface tension than the dispersing liquid and is immiscible or substantially immiscible with the dispersing liquid.

22. Method as claimed in claims 1 to 15, characterized in that the glass body produced is used as a preform for optical waveguides.

23. Method as claimed in claims 1 to 15, characterized in that the glass body produced is used as an envelope for lamps particularly halogen and gas discharge lamps.

**Revendications**

1. Procédé pour la fabrication de corps en verre, selon lequel un semiproduit poreux est formé à partir du matériau de départ pour le corps en verre sous forme d'une suspension thixotrope et ensuite séché, nettoyé et fritté, caractérisé en ce que le matériau de départ (7) est transmis par introduction de forces mécaniques dans un état de viscosité minimale et homogénéisé, versé dans un moule en un matériau hydrophobe dont la forme (1, 9) correspond à celle du corps en verre à fabriquer et séché dans le moule jusqu'à l'obtention d'un retrait d'environ 10% et ensuite, après le démoulage, soumis aux autres étapes de fabrication pour la réalisation du corps en verre.

2. Procédé selon la revendication 1, caractérisé en ce que comme matériau de départ (7) pour le corps en verre, on utilise une suspension contenant des particules de $SiO_2$ d'un diamètre de particule situé dans la gamme de 10 à 500 nm, de préférence 15 à 100 nm, le diamètre moyen des particules étant de 40 nm.

3. Procédé selon la revendication 1 ou 2, caractérisé par l'utilisation d'une suspension présentant un rapport substance solide-dispersant de 0,5 : 1 à 1,2 : 1.

4. Procédé selon l'une des revendications 1 à 3, caractérisé en ce que de l'eau est utilisée comme dispersant.

5. Procédé selon l'une des revendications 1 à 4, caractérisé en ce que la suspension est additionnée d'une substance d'addition ionogène qui décale la valeur pH de la suspension dans la direction de la gamme basique (pH = 5,5 à 8).

6. Procédé selon la revendication 5, caractérisé en ce que la substance d'addition ionogène est additionnée dans une quantité ≤ 5% en poids

rapportée à la part en substance solide dans la suspension.

7. Procédé selon la revendication 5 ou 6, caractérisé en ce qu'un composé d'ammonium est utilisé comme substance d'addition.

8. Procédé selon la revendication 7, caractérisé en ce qu'une solution aqueuse à 5% de $NH_4F$ est utilisée comme substance d'addition.

9. Procédé selon la revendication 8, caractérisé en ce que comme matériau de départ (7) est utilisée une suspension aqueuse contenant des particules de $SiO_2$ d'un diamètre de particule situé dans la gamme de 10 à 100 nm, le diamètre moyen des particules étant de 40 nm, pour un rapport en poids de $SiO_2$ : eau de 1 : 1, laquelle suspension est additionnée d'une solution aqueuse à 5% de $NH_4F$ comme substance d'addition ionogène dans une quantité de O,8% en poids, rapportée à la part en substance solide dans la suspension.

10. Procédé selon l'une des revendications 1 à 9, caractérisé en ce que le matériau de départ (7) est transmis par effet de sons à une fréquence f = 20 à 200 Hz ou d'ultrasons à une fréquence f = 20 à 50 kHz à un état de viscosité minimale.

11. Procédé selon l'une des revendications 1 à 10, caractérisé en ce que le matériau de départ (7) est formé dans un moule (1) en matière synthétique et séché par diffusion de dispersant par au moins une ouverture (5) dans la face supérieure du moule.

12. Procédé selon la revendication 11, caractérisé en ce que comme matériau pour le moule (1), on utilise du polytétrafluoréthylène, polyéthylène, polycarbonate, plexiglas ou chlorure polyvinylique, présentant notamment des surfaces polies.

13. Procédé selon l'une des revendications 1 à 10, caractérisé en ce que le matériau de départ est formé dans un moule en une matière synthétique élastique poreuse présentant des pores de la grandeur des molécules de dispersant et séché par diffusion du dispersant par l'intermédiaire des pores.

14. Procédé selon la revendication 13, caractérisé en ce que comme moule est utilisé un tuyau souple à mince paroi (9) en caoutchouc au silicone qui est disposé dans un moule de support poreux (11) correspondant à la forme du corps en verre à fabriquer.

15. Procédé selon l'une des revendications 11 à 14, caractérisé en ce que pour la forme on utilise une feuille en matière synthétique qui est dissoute dans un solvant dont la tensio-activité est plus faible que celle du dispersant et qui n'est pas ou guère miscible au dispersant.

16. Dispositif pour la mise en oeuvre du procédé selon les revendications 1 à 15 présentant un moule correspondant à la forme du corps en verre à fabriquer pour la réception du matériau de départ sous forme de suspension pour le corps en verre, caractérisé par un moule en un matériau hydrophobe présentant un couvercle (3) muni d'au moins une ouverture (5) par laquelle peut sortir par diffusion du dispersant pendant le processus de séchage du matériau de départ (7) transmis avant le remplissage du moule à un état de viscosité minimale.

17. Dispositif selon la revendication 16, caractérisé en ce que le moule est un cylindre (1) en matière synthétique, notamment en polytétrafluoréthylène, polyéthylène, polycarbonate, plexiglas ou chlorure polyvinylique, présentant notamment des surfaces polies.

18. Dispositif pour la mise en oeuvre du procédé selon la revendication 1 à 15 présentant un moule correspondant à la forme du corps en verre à fabriquer pour la réception de matériau de départ sous forme de suspension pour le corps en verre, caractérisé par un moule poreux en une matière synthétique hydrophobe de préférence élastique présentant des pores d'un diamètre de la grandeur des molécules du dispersant par l'intermédiaire desquels du dispersant peut sortir par diffusion pendant le processus de séchage du matériau de départ (7) transmis avant le remplissage du moule à un état de viscosité minimale.

19. Dispositif selon la revendication 18, caractérisé en ce que le moule est introduit dans un moule de support poreux correspondant à la forme du corps en verre à réaliser.

20. Dispositif selon la revendication 18 ou 19, caractérisé en ce que le moule est un tuyau souple (9) en caoutchouc au silicone qui est introduit dans un moule de support sous forme de cylindre (11) et qui présente une tubulure de remplissage (13).

21. Dispositif selon l'une des revendications 16 à 20, caractérisé en ce que le moule (1, 9) est constitué par une feuille en matière synthétique hydrophobe qui peut être dissoute par voie chimique dans un solvant dont la tensio-activité est plus faible que celle du dispersant et qui n'est pas ou guère miscible au dispersant.

22. Procédé selon la revendication 1 à 15, caractérisé en ce que le corps en verre réalisé est utilisé comme préforme pour des guides d'ondes optiques.

23. Procédé selon les revendications 1 à 15, caractérisé en ce que le corps en verre réalisé est utilisé comme ampoule de lampe, notamment pour les lampes à décharge dans le gaz ou à l'halogène.

FIG.1

FIG.2